# EUROPÄISCHE PATENTSCHRIFT

(11) **EP 0 352 549 B1**
(45) Veröffentlichungstag und Bekanntmachung des Hinweises auf die Patenterteilung: **07.06.1995**
(21) Anmeldenummer: 89112769.8
(22) Anmeldetag: 12.07.1989
(51) Int. Cl.: G06F 7/50

(54) **Carry-select-Addierer**
Carry select adder
Additionneur à sélection de retenue

(30) Priorität: 29.07.1988 DE 3825969
(43) Veröffentlichungstag der Anmeldung: 31.01.1990
(73) Patentinhaber: SIEMENS AKTIENGESELLSCHAFT, 80333 München (DE)
(72) Erfinder: Knauer, Karl, Dr.-Ing., D-8018 Grafing (DE); Kamp, Winfried, Dipl.-Ing., D-8000 München 83 (DE)

(56) Entgegenhaltungen:
- EP-A- 0 239 168
- EP-A- 0 257 362
- US-A- 4 525 797
- ICASSP 86 PROCEEDINGS Bd. 3, April 1986, TOKYO Seiten 1533 - 1536; HUBER ET AL.: 'Fir lowpass filter for signal decimation with 15 MHz clock frequency. '
- 1988 IEEE ISCS PROCEEDINGS Bd. 1, Juni 1988, ESPOO, FINLAND Seiten 235 - 238;OKLOBDZIJA: 'Simple and efficient cmos circuit for fast VLSI adder realization

## Beschreibung

Die Erfindung bezieht sich auf einen Carry-Select-Addierer mit blockweise eingeteilten Addiererzellen nach dem Oberbegriff des Patentanspruchs 1.

Bei einer großen Anzahl von digitalen Logikschaltungen, beispielsweise digitalen Filtern, Signalprozessoren und Mikroprozessoren, werden Addierer benötigt. Das einfachste Prinzip für einen solchen Addierer ist das "Ripple-Carry"-Verfahren, bei dem ein entstehender Übertrag (Carry) seriell von einer Addiererzelle für das jeweils niederwertige Bit zu einer Addiererzelle für das jeweils höherwertige Bit übertragen wird. Die Durchlaufzeit des Übertragssignals bestimmt dabei im wesentlichen die Additionszeit.

Bei einem weiteren Prinzip, dem "Carry-Select"-Verfahren, enthalten die blockweise zusammengefügten Addiererzellen eines Addierers doppelte Carrypfade. Je ein Carrypfad wird für ein fiktiv angenommenes eingangsseitiges Carrysignal von "0" bzw. "1" am Eingang einer Addiererzelle verwendet. Welcher der Carrypfade im weiteren Verlauf ausgewählt wird, entscheidet ein sogenanntes Blockcarrysignal, das aus den beiden einzelnen Carrysignalen der letzten Stufe des davorliegenden Blocks und dessen Blockcarrysignal gebildet wird. Hierdurch sind die einzelnen Carrysignale in einem jeden Block unabhängig von dem Carrysignal vorhergehender Blöcke.

Man benötigt für den Aufbau eines "Carry-Select"-Addierers wenigstens zwei verschiedene Addiererzellen, nämlich eine Eingangsaddiererzelle bei Blockbeginn und eine normale Addiererzelle, die in beliebiger Anzahl folgen kann. Blöcke höherer Ordnung in dem "Carry-Select"-Addierer enthalten eine größere Anzahl von Variableneingängen und Summenausgängen wie Blöcke niederer Ordnung. Jede einzelne Addiererzelle in den Blöcken enthält jeweils zwei Variableneingänge, zwei Carryein- und -ausgänge, einen Blockcarryein- und -ausgang sowie einen Summenausgang. Die Anzahl der Variableneingänge und Summenausgänge in jedem Block sollte dabei möglichst so gewählt werden, daß die Laufzeit eines einzelnen Carrysignals durch einen Block der Laufzeitsumme der Blockcarrysignale bis zu diesem Block entspricht. Das Blockcarrysignal wird in der ersten Stufe eines Blockes aus den beiden Carrysignalen der letzten Stufe des davorliegenden Blockes und dessen Blockcarrysignals gebildet. Damit sind bei der Eingangsstufe jedes Blocks die einzelnen Carrysignale nur von den Variableneingängen abhängig und die Carryeingänge sind fest mit einem "Low"- bzw. "High"-Pegel verschaltet. Die Carrysignale in einem "Carry-Select"-Addierer durchlaufen jeden Block parallel in zwei Carrypfaden, wobei ein Carrypfad für die Annahme eines Carrysignals von "0" am Eingang des Blocks und ein zweiter Carrypfad für die Annahme eines Carrysignals von "1" am Blockeingang in allen Addiererzellen implementiert ist. Die Carrysignale in den Addiererzellen sind dabei in unterschiedlichster Weise von den Eingangssignalen an den Variableneingängen der Addiererzellen und von Carrysignalen an den Carryeingängen der Addiererzellen abhängig.

Aus der Patentanmeldung DE-A-35 34 863 ist es bekannt, daß man die Laufzeit der Carrysignale in einer Addiererschaltung dadurch beschleunigen kann, indem man abwechselnd Addiererzellen mit invertiertem Carryeingang und nicht invertiertem Carryausgang mit Addiererzellen mit nicht invertiertem Carryeingang und invertiertem Carryausgang miteinander verschaltet.

In den weiteren Patentanmeldungen DE-A-3 323 607 und EP-A-0 257 362 werden schnelle Addierer/Subtrahierer nach dem "Carry-Select"-Prinzip vorgeschlagen. Dieser Addierer bzw. Subtrahierer umfaßt eine Mehrzahl von Stufen, die in Gruppen aufgeteilt sind und mit doppelten Übertragungspfaden ausgestattet sind. Diese arbeiten mit fiktiven eingangsseitigen Überträgen "0" bzw. "1" in den niederwertigsten Stufen der einzelnen Gruppen.

Nachteilig in den Addiererschaltungen der angegebenen Patentanmeldungen erweist sich hierbei im Betrieb der Addierer die zu niedrige Verarbeitungsgeschwindigkeit.

Der Erfindung liegt die Aufgabe zugrunde, eine Addiererschaltung nach dem "Carry-Select"-Prinzip anzugeben, die eine hohe Verarbeitungsgeschwindigkeit aufweist.

Diese Aufgabe wird durch die kennzeichnenden Merkmale des Patentanspruchs 1 gelöst.

Der mit der Erfindung erzielbare Vorteil besteht insbesondere neben der hohen Verarbeitungsgeschwindigkeit in einem einfachen in drei unterschiedlichen Addiererzellen bestehenden Aufbau der Addiererschaltung.

Die Ansprüche 2 bis 5 sind auf eine weitere Ausgestaltung der Erfindung gerichtet.

Die Erfindung wird nachfolgend anhand von einem in der Zeichnung dargestellten Ausführungsbeispiel näher erläutert. Dabei zeigen
- Fig. 1: eine Verschaltung der einzelnen Addiererzellen zu einem "Carry-Select"-Addiererblock,
- Fig. 2: ein Blockschaltbild einer Eingangsaddiererzelle,
- Fig. 3: ein Blockschaltbild einer Addiererzelle vom ersten Typ,
- Fig. 4: ein Blockschaltbild einer Addiererzelle vom zweiten Typ.

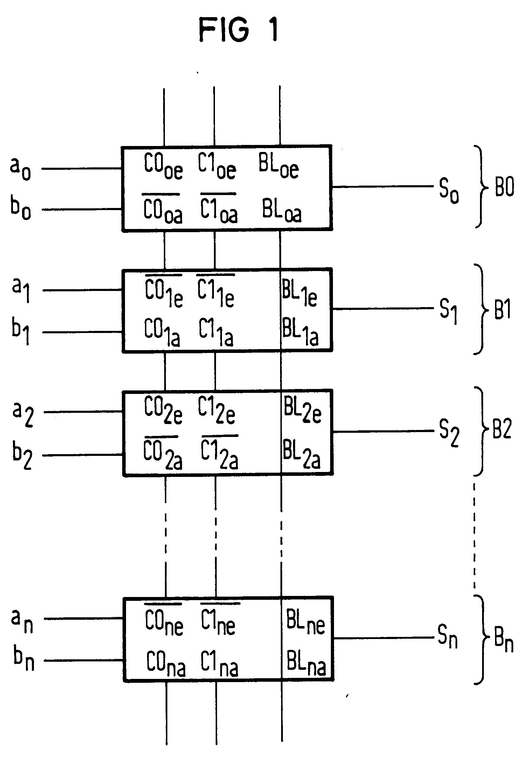

Fig. 1 zeigt einen "Carry-Select"-Addiererblock mit Addiererzellen B0, B1, B2, ...Bn, wobei die Addiererzellen B0, B1, B2 die ersten drei Addiererzellen eines Blocks darstellen. Zum Aufbau eines "Carry-Select"-Addierers wird eine beliebige Anzahl von Addiererblöcken hintereinander geschaltet, wobei die Anzahl der Addiererzellen, die zu einem Block zusammengefaßt werden, mit steigender Ordnung der Addiererblöcke zunimmt. Jede der Addiererzellen enthält zwei Variableneingänge a₀, b₀; a₁, b₁; a₂, b₂, ...aₙ, bₙ, einen Blockcarryeingang BL₀ₑ; BL₁ₑ; BL₂ₑ, ...BLₙₑ, einen Blockcarryausgang BL₀ₐ; BL₁ₐ; BL₂ₐ,... BLₙₐ, einen Summenausgang S₀; S₁; S₂; ...Sₙ, einen ersten und zweiten Carryeingang C0₀ₑ, C1₀ₑ; C̅0̅₁̅ₑ̅, C̅1̅₁̅ₑ̅; C0₂ₑ, C1₂ₑ; .., C̅0̅ₙ̅ₑ̅, C̅1̅ₙ̅ₑ̅ und einen ersten und zweiten Carryausgang C̅0̅₀̅ₐ̅, C̅1̅₀̅ₐ̅; C0₁ₐ, C1₁ₐ; C̅0̅₂̅ₐ̅, C̅1̅₂̅ₐ̅, ..., C0ₙₐ, C1ₙₐ. Jeder Block besteht aus einer Eingangsaddiererzelle B0 sowie aus Addiererzellen eines ersten und zweiten Typs, wobei die Addiererzellen vom ersten und zweiten Typ in einem Block abwechselnd miteinander verschaltet sind. Der erste und zweite Carryeingang C0₀ₑ, C1₀ₑ und der Blockcarryeingang BL₀ₑ der Eingangsaddiererzelle B0 des ersten Blockes sind für eine Addition auf einen festen "Low"-Pegel "0" gelegt, um feste Anfangsbedingungen für den Additionsablauf im "Carry-Select "-Addierer vorzugeben. Jeweils der erste und zweite invertierte Carryausgang C̅0̅₀̅ₐ̅, C̅1̅₀̅ₐ̅ einer Eingangsaddiererzelle B0 ist jeweils mit dem ersten und zweiten invertierten Carryeingang C̅0̅₁̅ₑ̅, C̅1̅₁̅ₑ̅ einer Addiererzelle des ersten Typs B1 und jeweils der erste und zweite nicht invertierte Carryausgang C0₁ₐ, C1₁ₐ der Addierzellen des ersten Typs ist mit jeweils dem ersten und zweiten nicht invertierten Carryeingang C0₂ₑ, C1₂ₑ einer Addiererzelle des zweiten Typs B2 verschaltet, der Blockcarryausgang BL₀ₐ der Eingangsaddiererzelle B0 ist weiterhin mit dem Blockcarryeingang BL₁ₑ der Addiererzelle des ersten Typs B1 und der Blockcarryausgang BL₁ₐ der Addiererzelle des ersten Typs B1 ist mit dem Blockcarryeingang BL₂ₑ der Addiererzelle des zweiten Typs B2 verbunden. Die restlichen Addiererzellen innerhalb eines Blockes sind wechselweise vom ersten Typ und zweiten Typ und sind analog mit ihren Carryein- und -ausgängen sowie mit ihren Blockcarryein- und -ausgängen untereinander verbunden. Die letzte Addiererzelle Bn ist vom ersten Typ und bildet den Abschluß eines Blocks für den "Carry-Select"-Addierer und enthält neben den Variableneingängen aₙ, bₙ und dem Summenausgang Sₙ die beiden invertierten Carryeingänge C̅0̅ₙ̅ₑ̅_{,} C̅1̅ₙ̅ₑ̅, die beiden nicht invertierten Carryausgänge C0ₙₐ, C1ₙₐ den Blockcarryein- und -ausgang BLₙₑ, BLₙₐ.

Wie aus der Fig. 1 zu erkennen ist, wird das Blockcarrysignal für den Addiererblock in der Eingangsaddiererzelle B0 gebildet und durch die restlichen Addiererzellen des Addiererblocks weitergeleitet. In der Eingangsaddiererzelle erfolgt eine Auswertung des Blockcarrysignals und der Carrysignale des vorhergehenden Addiererblocks zu einem neuen Blockcarrysignal. Die Carrysignale der Eingangsaddiererzelle B0 eines Addiererblocks, die im ersten und zweiten invertierten Carryausgang C̅0̅₀̅ₐ̅ und C̅1̅₀̅ₐ̅ in die nächstfolgende Addiererzelle vom ersten Typ B1 übergeben werden, hängen dabei lediglich von den Variablen an den Variableneingängen a₀, b₀ ab und nicht von den Carrysignalen am ersten und zweiten Carryeingang C0₀ₑ, C1₀ₑ. Für die restlichen Addiererzellen vom ersten und zweiten Typ B1, B2 in einem Addiererblock sind jedoch zusätzlich die Carrysignale an den invertierten bzw. nicht invertierten Carryeingängen C̅0̅₁̅ₑ̅_{,} C̅1̅₁̅ₑ̅ bzw. C0₂ₑ, C1₂ₑ für die Carrysignale an den nichtinvertierten bzw. invertierten Carryausgängen C0₁ₐ, C1₁ₐ bzw. C̅0̅₂̅ₐ̅, C̅1̅₂̅ₐ̅ zu berücksichtigen. Die abwechselnde Anordnung von Addiererzellen des ersten und zweiten Typs B1, B2 nach Fig. 1 dient zur Beschleunigung der Carrysignale in den Carrypfaden der einzelnen Addiererzellen und somit zu einer Erhöhung der Verarbeitungsgeschwindigkeit des "Carry-Select"-Addierers.

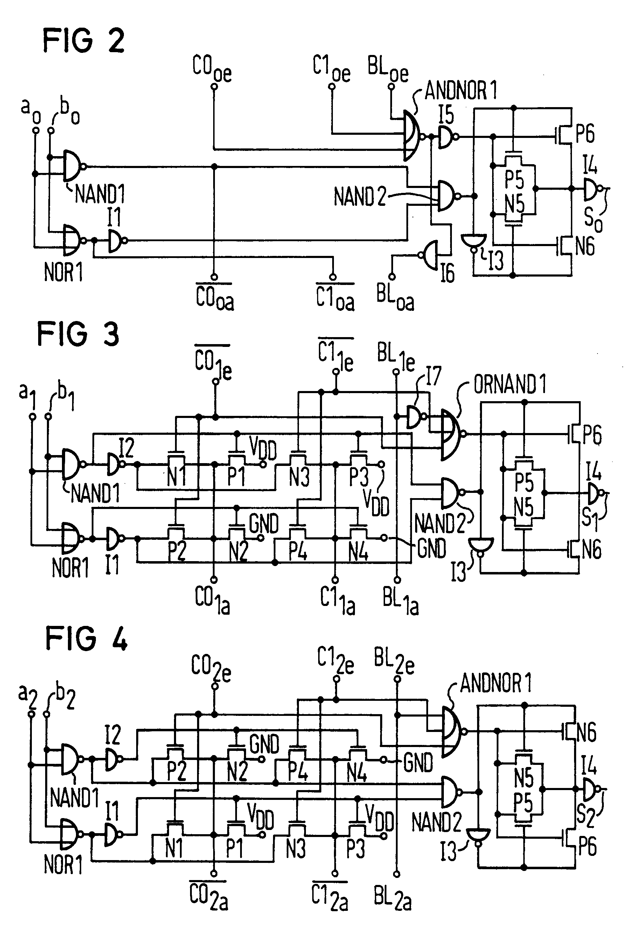

Fig. 2 zeigt das Blockschaltbild einer Eingangsaddiererzelle, wie sie beim "Carry-Select"-Addierer am Anfang jeden Blockes vorhanden ist. Die Eingangsaddiererzelle enthält hierbei zwei NAND-Gatter NAND 1, NAND2, fünf Inverter I1, I3, I4, I5 und I6, ein NOR-Gatter NOR1, ein ANDNOR-Gatter ANDNOR1, zwei p-Kanal-Feldeffekttransistoren P5, P6, sowie n-Kanal-Feldeffekttransistoren N5 und N6.

Der erste Variableneingang a₀ ist mit einem ersten Eingang des ersten NAND-Gatters NAND1 und mit einem ersten Eingang eines NOR-Gatters NOR1 verbunden und der zweite Variableneingang b₀ ist mit einem zweiten Eingang des ersten NAND-Gatters NAND1 und mit einem zweiten Eingang des NOR-Gatters NOR1 verschaltet. Der Ausgang des ersten NAND-Gatters NAND1 bildet den ersten invertierten Carryausgang C̅0̅₀̅ₐ̅ und ist gleichzeitig an den ersten Eingang des zweiten NAND-Gatters NAND2 angeschlossen, während der Ausgang des NOR-Gatters NOR1 den zweiten invertierten Carryausgang C̅1̅₀̅ₐ̅ darstellt und über einen ersten Inverter I1 mit dem zweiten Anschluß des zweiten NAND-Gatters NAND2 verbunden ist. Der erste Carryeingang C₀ₑ ist auf den NOR-Eingang des ANDNOR-Gatters ANDNOR1 und der zweite Carryeingang C1₀ₑ sowie der Blockcarryeingang BL₀ₑ sind jeweils auf einen UND-Eingang des ANDNOR-Gatters ANDNOR1 aufgeschaltet, der Ausgang des ANDNOR-Gatters ANDNOR1 bildet über einen zweiten Inverter I6 den Blockcarryausgang BL₀ₐ der Eingangsaddiererzelle. Gleichzeitig ist der Ausgang des ANDNOR-Gatters ANDNOR1 über einen dritten Inverter I5 mit dem Gate eines ersten p-Kanal-Feldeffekttransistors P6 und dem Gate eines ersten n-Kanal-Feldeffekttransistors N6 sowie an einen ersten Anschluß eines zweiten p-Kanal-Feldeffekttransistors P5 und an einen ersten Anschluß eines zweiten n-Kanal-Feldeffekttransistors N5 geschaltet. Der Ausgang des zweiten NAND-Gatters NAND2 ist zum einen mit dem Gate des zweiten p-Kanal-Feldeffekttransistors P5 und zum anderen an einen ersten Anschluß des ersten p-Kanal-Feldeffekttransistors P6 angeschlossen und über einen vierten Inverter I3 mit dem Gate des zweiten n-Kanal-Feldeffekttransistors N5 und mit dem ersten Anschluß des ersten n-Kanal-Feldeffekttransistors N6 verschaltet. Der zweite Anschluß des ersten und zweiten N-Kanal-Feldeffekttransistors N6, N5 und der zweite Anschluß des ersten und zweiten p-Kanal-Feldeffekttransistors P6, P5 sind gemeinsam an einen Eingang eines fünften Inverters I4 geschaltet, an dessem Ausgang der Summenausgang S₀ der Eingangsaddiererzelle angeordnet ist.

Fig. 3 zeigt ein Blockschaltbild einer Addiererzelle vom ersten Typ, wobei diese eine Gatteranordnung für zwei Variablen zur Bewertung eines ersten und zweiten Carryeingangssignals, zur Summenbildung und zur Carrybildung aufweist, und wobei jeweils ein Variableneingang für eine der zwei Variablen vorgesehen ist. Die Gatteranordnung der Addiererzelle des ersten Typs ist derart gebildet, daß das Aufladen der Kapazität des ersten und zweiten nicht invertierten Carryausgang C0₁ₐ, C1₁ₐ entweder jeweils über zwei als Pullup- bzw- Pulldown-Transistoren wirkende Feldeffekttransistoren P1, N2 für den ersten nicht invertierten Carryausgang C0₁ₐ bzw. P3, N4 für den zweiten nicht invertierten Carryausgang C1₁ₐ oder jeweils über zwei Serienschaltungen für den ersten und zweiten nicht invertertierten Carryausgang C0₁ₐ, C1₁ₐ geschieht, die je ein Invertergatter I1, I2 und je einen weiteren Transfertransistor N1, P2 für den ersten nicht invertierten Carryausgang C0₁ₐ bzw. N3, P4 für den zweiten nicht invertierten Carryausgang C1₁ₐ enthalten.

Die Addiererzelle des ersten Typs ist zum Teil mit gleichen Bauelementen wie die Eingangsaddiererzelle nach Fig. 2 aufgebaut, so daß gleiche Bezugszeichen in der Fig. 3 und Fig. 2 Verwendung finden. Die Addiererzelle des ersten Typs besteht aus zwei NAND-Gattern NAND1, NAND2, fünf Invertern I1, I2, I3, I4, I7, einem NOR-Gatter NOR1, einem ORNAND-Gatter ORNAND1, sechs n-Kanal-Feldeffekttransistoren N1, N2, N3, N4, N5, N6, und sechs p-Kanal-Feldeffekttransistoren P1, P2, P3, P4, P5, P6. Hierbei sind die p-Kanal-Feldeffekttransistoren P1, P3 als Pullup-Transistoren, die n-Kanal-Feldeffekttransistoren N2, N4 als Pulldown-Transistoren und die restlichen Feldeffekttransistoren als Transfertransistoren eingesetzt. Der erste Variableneingang a₁ der Addiererzelle des ersten Typs ist mit dem ersten Eingang des ersten NAND-Gatters NAND1 und mit dem ersten Eingang des NOR-Gatters NOR1 verbunden, und der zweite Variableneingang b₁ ist mit dem zweiten Eingang des ersten NAND-Gatters NAND1 und mit dem zweiten Eingang des NOR-Gatters NOR1 verschaltet. Der Ausgang des ersten NAND-Gatters NAND1 ist über einen ersten Inverter I2 mit dem ersten Anschluß eines ersten n-Kanal-Transfertransistors N1 und mit dem ersten Anschluß eines zweiten n-Kanal-Transfertransistors N3 verbunden, wobei der erste Inverter I2 und der erste n-Kanal-Transfertransistor N1 sowie der zweite n-Kanal-Transfertransistor N3 und der erste Inverter I2 je eine Serienschaltung bilden, und der Ausgang des ersten NAND-Gatters NAND1 ist zusätzlich an einen ersten Eingang eines zweiten NAND-Gatters NAND2 und an je einen Gateanschluß des ersten und zweiten Pullup-Transistors P1, P3 angeschlossen. Der Ausgang des NOR-Gatters NOR1 ist über einen zweiten Inverter I1 mit dem ersten Anschluß eines ersten und zweiten p-Kanal-Transfertransistors P2, P4 angeschlossen, außerdem ist der Ausgang des zweiten Inverters I1 mit einem zweiten Eingang des zweiten NAND-Gatters NAND2 verbunden, weiterhin ist der Ausgang des NOR-Gatters NOR1 mit je einem Gateanschluß eines ersten und zweiten Pulldown-Transistors N2, N4 verschaltet. Der erste Anschluß des ersten und zweiten Pulldown-Transistors N2, N4 ist mit der Masse GND, während der erste Anschluß des ersten und zweiten Pullup-Transistors P1, P3 mit der Versorgungsspannung V_{DD} verschaltet. Der erste invertierte Carryeingang C̅0̅₁̅ₑ̅ ist mit je einem Gateanschluß des ersten n-Kanal-Transfertransistors N1 und des ersten p-Kanal-Transfertransistors P2 und mit einem UND-Eingang des ORNAND-Gatters ORNAND1 verbunden, während der zweite invertierte Carryeingang C̅1̅₁̅ₑ̅ mit je einem Gateanschluß des zweiten n-Kanal-Transfertransistors N3 und des zweiten p-Kanal-Transfertransistor P4 sowie mit dem ersten ODER-Eingang des ORNAND-Gatters ORNAND1 verschaltet ist. Der Aufbau der ersten Addiererzelle des ersten Typs nach Fig. 3 sieht weiterhin vor, daß der erste nicht invertierte Carryausgang C0₁ₐ mit dem zweiten Anschluß des ersten n-Kanal-Transfertransistors N1, mit dem zweiten Anschluß des ersten p-Kanal-Transfertransistors P2, mit dem zweiten Anschluß des ersten Pullup-Transistors P1 und mit dem zweiten Anschluß des ersten Pulldown-Transistors N2 verbunden ist und der zweite nicht invertierte Carryausgang C1₁ₐ ist mit einem zweiten Anschluß eines zweiten n-Kanal-Transfertransistors N3, mit einem zweiten Anschluß des zweiten p-Kanal-Transfertransistors P4, mit einem zweiten Anschluß des zweiten Pullup-Transistors P3 sowie mit einem zweiten Anschluß des zweiten Pulldown-Transistors N4 verbunden. Der Blockcarryeingang BL₁ₑ bildet gleichzeitig den Blockcarryausgang BL₁ₐ und ist über einen dritten Inverter I7 mit einem zweiten ODER-Eingang des ORNAND-Gatters ORNAND1 verschaltet. Der Ausgang des ORNAND-Gatters ORNAND1 ist mit je einem Gateanschluß des dritten p-Kanal-Transfertransistors P6 und des dritten n-Kanal-Transfertransistors N6 sowie mit einem ersten Anschluß eines vierten p-Kanal-Transfertransistors P5 und einen ersten Anschluß eines vierten n-Kanal-Transfertransistors N5 verbunden und der Ausgang des zweiten NAND-Gatters NAND2 ist mit einem ersten Anschluß des dritten p-Kanal-Transfertransistors P6 und über einen vierten Inverter I3 mit einem ersten Anschluß des dritten n-Kanal-Transfertransistors N6 und mit einem Gateanschluß des vierten n-Kanal-Transfertransistors N5 verbunden. Weiterhin ist der Ausgang des zweiten NAND-Gatters NAND2 mit dem Gateanschluß des vierten p-Kanal-Transfertransistors P5 verbunden und der Summenausgang S1 ist über einen fünften Inverter I4 jeweils mit einem zweiten Anschluß des dritten und vierten p-Kanal-Transfertransistors P6, P5 und jeweils mit einem zweiten Anschluß des dritten und vierten n-Kanal-Transfertransistors N6, N5 verbunden.

In Fig. 4 ist ein Blockschaltbild einer Addiererzelle vom zweiten Typ wiedergegeben, wobei diese ebenfalls eine Gatteranordnung für zwei Variablen zur Bewertung eines ersten und zweiten Carryeingangsignals, zur Summenbildung und zur Carrybildung aufweist, und wobei jeweils ein Variableneingang für eine der zwei Variablen vorgesehen ist.

Die Gatteranordnung der Addiererzelle vom zweiten Typ ist derart gebildet, daß das Aufladen der Kapazität des ersten und zweiten invertierten Carryausgangs C̅0̅₂̅ₐ̅, C̅1̅₂̅ₐ̅ entweder jeweils über zwei als Pullup- bzw. Pulldown-Transistoren wirkende Feldeffekttransistoren P1, N2 für den ersten invertierenden Carryausgang C̅0̅₂̅ₐ̅ bzw. P3, N4 für den zweiten invertierten Carryausgang C̅1̅₂̅ₐ̅ oder über jeweils zwei Transfertransistoren N1, P2 für den ersten invertierten Carryausgang C̅0̅₂̅ₐ̅ bzw. N3, P4 für den zweiten invertierten Carryausgang C̅1̅₂̅ₐ̅, geschieht.

Die Addiererzelle des zweiten Typs ist ebenfalls zum Teil mit gleichen Bauelementen wie die Eingangsaddiererzelle nach Figur 2 oder die Addiererzelle vom ersten Typ nach Figur 3 aufgebaut, so daß gleiche Bezugszeichen in Figur 4, Figur 3 und Figur 2 Verwendung finden. Die Addierzelle des zweiten Typs besteht aus zwei NAND-Gattern NAND1, NAND2, einem NOR-Gatter NOR1, einem ANDNOR-Gatter ANDNOR1, vier Invertern I1, I2, I3, I4, sechs n-Kanal-Feldeffekttransistoren N1, N2, N3, N4, N5, N6 sowie sechs p-Kanal-Feldeffekttransistoren P1, P2, P3, P4, P5, P6. Ebenso wie bei der Addiererzelle vom ersten Typ nach Figur 3 sind die p-Kanal-Feldeffekttransistoren P1, P3 als Pullup-Transistoren, die n-Kanal-Feldeffekttransistoren N2, N4 als Pulldown-Transistoren und die restlichen Feldeffekttransistoren als Transfertransistoren eingesetzt. Der erste Variableneingang a₂ ist mit dem ersten Eingang eines ersten NAND-Gatters NAND1 und mit dem ersten Eingang des NOR-Gatters NOR1 verbunden, während der zweite Variableneingang b₂ mit dem zweiten Eingang des ersten NAND-Gatters NAND1 und dem zweiten Eingang des NOR-Gatters NOR1 verschaltet ist. Der Ausgang des ersten NAND-Gatters NAND1 ist über einen ersten Inverter I2 mit je einem Gateanschluß eines ersten und zweiten Pulldown-Transistors N2, N4 verbunden, und der Ausgang des ersten NAND-Gatters NAND1 ist weiterhin mit einem ersten Anschluß eines ersten p-Kanal-Transfertransistors P2 und einem ersten Anschluß eines zweiten p-Kanal-Transfertransistor P4 als auch mit einem ersten Anschluß des zweiten NAND-Gatters NAND2 verschaltet. Der Ausgang des NOR-Gatters NOR1 ist über einen zweiten Inverter I1 mit jeweils einem Gateanschluß des ersten und zweiten Pullup-Transistors P1, P3 und mit einem zweiten Eingang des NAND-Gatters NAND2 verbunden und der Ausgang des NOR-Gatters NOR1 ist weiterhin jeweils an einem ersten Anschluß des ersten und zweiten n-Kanal-Transfertransistors N1, N3 angeschlossen. Jeweils der erste Anschluß des ersten und zweiten Pullup-Transistors P1, P3 ist in der Addiererzelle des zweiten Typs nach Figur 4 mit der Versorgungsspannung V_{DD} und ein erster Anschluß des ersten und zweiten Pulldown-Transistors N2, N4 ist mit der Masse GND verbunden. Der erste nicht invertierte Carryeingang C0₂ₑ ist jeweils mit dem Gateanschluß des ersten p-Kanal-Transfertransistors P2, des ersten n-Kanal-Transfertransistors N1 sowie mit einem ODER-Eingang des ANDNOR-Gatters ANDNOR1 und der zweite nicht invertierte Carryeingang C1₂ₑ mit jeweils dem Gateanschluß des zweiten p-Kanal-Transfertransistors P4 und des zweiten n-Kanal-Transfertransistors N3 sowie mit einem ersten UND-Eingang des ANDNOR-Gatters ANDNOR1 verschaltet. Der Blockcarryeingang BL₂ₑ bildet gleichzeitig den Blockcarryausgang BL₂ₐ der Addierzelle des zweiten Typs und ist gleichzeitig an einen zweiten UND-Eingang des ANDNOR-Gatters ANDNOR1 angeschlossen. Der erste invertierte Carryausgang C̅0̅₂̅ₐ̅ ist jeweils mit einem zweiten Anschluß des ersten p-Kanal-Transfertransistors P2, des ersten n-Kanal-Transfertransistors N1, des ersten Pulldown-Transistors N2 und des ersten Pullup-Transistors P1 verschaltet und der zweite invertierte Carryausgang C̅1̅₂̅ₐ̅ ist jeweils mit dem zweiten Anschluß des zweiten p-Kanal-Transfertransistors P4, des zweiten n-Kanal-Transfertransistors N3, des zweiten Pulldown-Transistors N4 und des zweiten Pullup-Transistors P3 verschaltet. Der Ausgang des ANDNOR-Gatters ANDNOR1 ist mit dem Gateanschluß des dritten n-Kanal-Transfertransistors N6, mit dem Gateanschluß des dritten p-Kanal-Transfertransistors P6 sowie jeweils mit einem ersten Anschluß des vierten n-Kanal-Transfertransistors N5 und des vierten p-Kanal-Transfertransistors P5 verbunden und der Ausgang des zweiten NAND-Gatters NAND2 ist mit einem ersten Anschluß des dritten n-Kanal-Transfertransistors N6 und mit dem Gateanschluß des vierten n-Kanal-Transfertransistors N5 sowie über einen dritten Inverter I3 mit dem Gateanschluß des vierten p-Kanal-Transfertransistors P5 und mit einem ersten Anschluß des dritten p-Kanal-Transfertransistors P6 verschaltet. Der Summenausgang S₂ ist über einen vierten Inverter I4 jeweils mit einem zweiten Anschluß des dritten und vierten n-Kanal-Transfertransistors N6, N5 und mit einem zweiten Anschluß des dritten und vierten p-Kanal-Transfertransistors P5, P6 verbunden.

Bei der Ausbildung der Addiererzellen des ersten und zweiten Typs sind die Pullup-Transistoren P1, P3 bzw. die Pulldown-Transistoren N2, N4 und die weiteren Transfertransistoren N1, N3 bzw. P2, P4 nicht Bestandteil eines Kombinationsgatters innerhalb der Gatteranordnung, so daß die Transfertransistoren, die in einem zeitkritischen Übertragungspfad eingefügt sind, so optimiert sind, daß sie für die vorherige Stufe eine geringe Kapazität bilden, dabei aber immer noch eine niederohmige Source-Drain-Strecke darstellen.

Die Eingangsaddiererzelle und die Addiererzelle des zweiten Typs sind zu einem großen Teil gleich aufgebaut, jedoch entfallen sämtliche Transfertransistoren bzw. Pullup- und Pulldown-Transistoren N1, N2, N3, N4, P1, P2, P3, P4. Da die Carrysignale an den nicht invertierten Carryeingängen C0₀ₑ bzw. C1₀ₑ der Eingangsaddiererzelle ausschließlich gemeinsam mit dem Blockcarrysignal am Blockcarryeingang BL₀ₑ zur Bestimmung des neuen Blockcarrysignals erforderlich sind, benötigt die Eingangsaddiererzelle keine Transfertransistoren und die Carrysignale am invertierten ersten und zweiten Carryausgang C̅0̅₀̅ₐ̅, C̅0̅₀̅ₐ̅ werden lediglich durch die Variablen an den Variableneingängen a₀, b₀ bestimmt.

Die Transfertransistoren P2, N1 bzw. P4, N3 in den Addiererzellen vom ersten und zweiten Typ haben funktionelle Aufgaben, während die Pullup- bzw. Pulldown-Transistoren P1, P3 bzw. N2, N4 für eine bessere Übertragung der Versorgungsspannung V_{DD} bzw. der Masse GND auf die ersten und zweiten Carryausgänge bestimmt sind.

In der Eingangsaddiererzelle dient das ANDNOR-Gatter ANDNOR1 im Gegensatz zum ANDNOR-Gatter ANDNOR1 in der Addiererzelle vom zweiten Typ zur Bestimmung eines neuen Blockcarrysignals, während das Blockcarrysignal in den übrigen Addiererzellen eines Addiererblockes lediglich weitergeleitet wird.

Der Eingangsaddiererzelle und den Addiererzellen vom ersten und zweiten Typ gemeinsam ist ein aus einem NAND-Gatter NAND1 und NOR-Gatter NOR1 bestehender Variableneingangsteil. Sowohl in der Eingangsaddiererzelle als auch in den übrigen Addierzellen werden die Carrysignale an den beiden Carryeingängen als auch das Blocksignal am Blockcarryeingang über das ANDNOR-Gatter ANDNOR1 bzw. das ORNAND-Gatter ORNAND1 im jeweiligen Summenausgangsteil mit der Summe aus den Variablen an den Variableneingängen ausgewertet und an den entsprechenden Summenausgang weitergeleitet.

## Patentansprüche

1. "Carry-Select"-Addierer mit blockweise eingeteilten Addiererzellen, wobei jede Addiererzelle zwei Variableneingänge (a₀, b₀; a₁, b₁; a₂, b₂, ... aₙ, bₙ), einen Blockcarry-Eingang (BL₀ₑ; BL₁ₑ; BL₂ₑ...BLₙₑ), einen Blockcarry-Ausgang (BL₀ₐ; BL₁ₐ; BL₂ₐ, ...BLₙₐ), einen Summenausgang (S₀; S₁, S₂, ...Sₙ), einen ersten und zweiten Carryeingang (C0₀ₑ, C1₀ₑ; C̅0̅₁̅ₑ̅, C̅1̅₁̅ₑ̅; C0₂ₑ, C1₂ₑ; ... C̅0̅₀̅ₙ̅, C̅1̅ₑ̅ₙ̅) und einen ersten und zweiten Carryausgang (C̅0̅₀̅ₐ̅, C̅1̅₀̅ₐ̅; C0₁ₐ, C1₁ₐ; C̅0̅₂̅ₐ̅, C̅1̅₂̅ₐ̅, ..., C0ₙₐ, C1ₙₐ) und jeder Block eine Eingangsaddiererzelle und eine bestimmte Anzahl von Addiererzellen eines ersten und zweiten Typs enthält, wobei der erste und zweite Carryeingang (C0₀ₑ; C1₀ₑ) und der Blockcarryeingang (BL₀ₑ) der Eingangsaddiererzelle des ersten Blocks weitere Variableneingänge darstellt, **dadurch gekennzeichnet**, daß jeweils der erste und zweite invertierte Carryausgang (C̅0̅₀̅ₐ̅, C̅1̅₀̅ₐ̅) einer Eingangsaddiererzelle mit jeweils dem ersten und zweiten invertierten Carryeingang (C̅0̅₁̅ₑ̅, C̅1̅₁̅ₑ̅) einer Addiererzelle des ersten Typs und jeweils der erste und zweite nicht invertierte Carryausgang (C0₁ₐ, C1₁ₐ) der Addiererzelle des ersten Typs mit jeweils dem ersten und zweiten nicht invertierten Carryeingang (C0₂ₑ, C1₂ₑ) einer Addiererzelle des zweiten Typs verschaltet ist, daß der Blockcarryausgang (BL₀ₐ) der Eingangsaddiererzelle mit dem Blockcarryeingang (BL₁ₑ) der Addiererzelle des ersten Typs und der Blockcarryausgang (BL₁ₐ) der Addiererzelle des ersten Typs mit dem Blockcarryeingang (BL₂ₑ) der Addiererzelle des zweiten Typs verbunden ist und die weiteren Addiererzellen in einem Block wechselweise vom ersten Typ und zweiten Typ über die Carryein- und -ausgänge und über die Blockcarryein- und -ausgänge ebenso miteinander verbunden sind, wobei die Eingangsaddiererzelle und die Addiererzellen des ersten und zweiten Typs eine Gatterordnung für zwei Variablen zur Bewertung eines ersten und zweiten Carryeingangssignals, zur Summenbildung und zur Carrybildung aufweist, und wobei jeweils ein Variableneingang für eine der zwei Variablen vorgesehen ist, daß die Gatteranordnung der Addiererzelle des ersten Typs derart gebildet ist, daß das Aufladen der Kapazität des ersten und zweiten nicht invertierten Carryausgangs (C0₁ₐ, C1₁ₐ) entweder jeweils über zwei als Pullup- bzw. Pulldown-Transistor wirkende Feldeffekttransistoren (P1, P3; N2, N4) oder jeweils über zwei Serienschaltungen für den ersten und zweiten nicht invertierten Carryausgang (C0₁ₐ, C1₁ₐ) geschieht, wobei die Serienschaltungen je ein Invertergatter (I1, I2) und je einen als Transfertransistor wirkenden Feldeffekttransistor (N1, P2; N3, P4) enthalten, und daß die Gatteranordnung der Addiererzelle des zweiten Typs derart gebildet ist, daß das Aufladen der Kapazität des ersten und zweiten invertierten Carryausgangs (̅C̅0̅₂̅ₐ̅, C̅1̅₂̅ₐ̅) entweder jeweils über zwei als Pullup- bzw. Pulldown-Transistoren wirkende Feldeffekttransistoren (P1, P3; N2, N4) oder jeweils über zwei als Transfertransistoren wirkende Feldeffekttransistoren (N1, P2; N3, P4) für den ersten und zweiten invertierten Carryausgang (C̅0̅₂̅ₐ̅, C̅1̅₂̅ₐ̅) gebildet wird und daß die als Pullup-bzw. Pulldowntransistoren und als Transfertransistoren wirkenden Feldeffekttransistoren (N1, N2, N3, N4, P1, P2, P3, P4) nicht Bestandteil eines Kombinationsgatters innerhalb der Gatteranordnung sind.

2. "Carry-Select"-Addierer nach Anspruch 1, **dadurch gekennzeichnet**, daß bei einer Addition von Eingangssignalen, die an den Variableneingängen (a₀, b₀; a₁, b₁; a₂, b₂; ...aₙ, bₙ) jeder Addiererzelle anliegen, die weiteren Variableneingänge mit einem festen "Low"-Pegel beschaltet sind.

3. "Carry-Select"-Addierer nach Anspruch 1 oder 2, **dadurch gekennzeichnet**, daß die Eingangsaddiererzelle zwei NAND-Gatter (NAND1, NAND2), fünf Inverter (I1, I3, I4, I5, I6), ein NOR-Gatter (NOR1), ein ANDNOR-Gatter (ANDNOR1), zwei p-Kanal- (P5, P6) und zwei n-Kanal-Feldeffekttransistoren (N5, N6) enthält, daß der erste Variableneingang (a₀) mit einem ersten Eingang eines ersten NAND-Gatters (NAND1) und mit einem ersten Eingang eines NOR-Gatters (NOR1) verbunden ist, daß der zweite Variableneingang (b₀) mit dem zweiten Eingang des ersten NAND-Gatters (NAND1) und mit dem zweiten Eingang des NOR-Gatters (NOR1) verschaltet ist, daß der Ausgang des ersten NAND-Gatters (NAND1) den ersten invertierten Carryausgang (C̅0̅₀̅ₐ̅) bildet und gleichzeitig an den ersten Eingang des zweiten NAND-Gatters (NAND2) angeschlossen ist, daß der Ausgang des NOR-Gatters (NOR1) den zweiten invertierten Carryausgang (C̅1̅₁̅ₐ̅) bildet und über einen ersten Inverter (I1) mit dem zweiten Anschluß des zweiten NAND-Gatters (NAND2) verschaltet ist, daß der erste Carryeingang (C0₀ₑ) auf den NOR-Eingang des ANDNOR-Gatters (ANDNOR1) und der zweite Carryeingang (C1₀ₑ) und der Blockcarryeingang (BL₀ₑ) jeweils auf einen UND-Eingang des ANDNOR-Gatters (ANDNOR1) geschaltet ist, daß der Ausgang des ANDNOR-Gatters (ANDNOR1) über einen zweiten Inverter (I6) den Blockcarryausgang (BL₀ₐ) der Eingangsaddiererzelle bildet und der Ausgang des ANDNOR-Gatters (ANDNOR1) über einen dritten Inverter (I5) mit dem Gate eines ersten p-Kanal-(P6), und dem Gate eines ersten n-Kanal-Feldeffekttransisotrs (N6), sowie an einen ersten Anschluß eines zweiten p-Kanal-(P5) und an einen ersten Anschluß eines zweiten n-Kanal-Feldeffekttransistors (N5) geschaltet ist, daß der Ausgang des zweiten NAND-Gatters (NAND2) zum einen mit dem Gate des zweiten p-Kanal-Feldeffekttransistors (P5) und zum anderen an einen ersten Anschluß des ersten p-Kanal-Feldeffekttransistors (P6) angeschlossen ist und über einen vierten Inverter (I3) mit dem Gate des zweiten n-Kanal-Feldeffekttransistors (N5) und mit dem ersten Anschluß des ersten n-Kanal-Feldeffekttransistors (N6) verschaltet ist, daß der zweite Anschluß des ersten und zweiten n-Kanal-Feldeffekttransistors (N6, N5) und der zweite Anschluß des ersten und zweiten p-Kanal-Feldeffekttransistors (P6, P5) an den Eingang eines fünften Inverters (I4) geschaltet sind, und daß der Ausgang des fünften Inverters (I4) den Summenausgang (S₀) der Eingangsaddiererzelle bildet.

4. "Carry-Select"-Addierer nach Anspruch 1 oder 2, **dadurch gekennzeichnet**, daß die Addierzelle des ersten Typs zwei NAND-Gatter (NAND1, NAND2), fünf Inverter (I1, I2, I4, I7), ein NOR-Gatter (NOR1), ein ORNAND-Gatter (ORNAND1), sechs n-Kanal- (N1, N2, N3, N4, N5, N6) und sechs p-Kanal-Feldeffekttransistoren (P1, P2, P3, P4, P5, P6) enthält, daß der erste Variableneingang (a₁) der Addiererzelle des ersten Typs mit dem ersten Eingang des ersten NAND-Gatters (NAND1) und mit dem ersten Eingang des NOR-Gatters (NOR1) verbunden ist, daß der zweite Variableneingang (b₁) mit dem zweiten Eingang des ersten NAND-Gatters (NAND1) und mit dem zweiten Eingang des NOR-Gatters (NOR1) verschaltet ist, daß der Ausgang des ersten NAND-Gatters (NAND1) über einen ersten Inverter (I2) mit dem ersten Anschluß eines ersten n-Kanal-Feldeffekttransistors (N1) und mit dem ersten Anschluß eines zweiten n-Kanal-Feldeffekttransistors (N3) verbunden ist, wobei der erste Inverter (I2) und der erste n-Kanal-Feldeffekttransistor (N1) sowie der zweite n-Kanal-Feldeffekttransistor (N3) und der erste Inverter (I2) je eine Serienschaltung bilden, daß der Ausgang des ersten NAND-Gatters (NAND1) mit einem ersten Eingang eines zweiten NAND-Gatters (NAND2) und mit je einem Gateanschluß eines ersten und zweiten p-Kanal-Feldeffekttransistors (P1, P3) verbunden ist, daß je ein erster Anschluß des ersten und zweiten p-Kanal-Feldeffekttransistors (P1, P3) mit der Versorgungsspannung (V_{DD}) verschaltet ist, daß der Ausgang des NOR-Gatters (NOR1) über einen zweiten Inverter (I1) mit dem ersten Anschluß eines dritten und eines vierten p-Kanal-Feldeffekttransistors (P2, P4) angeschlossen ist, daß der Ausgang des zweiten Inverters (I1) mit dem zweiten Eingang des zweiten NAND-Gatters (NAND2) verbunden ist, daß der Ausgang des NOR-Gatters (NOR1) an je einem Gateanschluß eines dritten und vierten n-Kanal-Feldeffekttransistors (N2, N4) angeschlossen ist, daß ein erster Anschluß des dritten und vierten n-Kanal-Feldeffekttransistors (N2, N4) mit Masse (GND) verbunden ist, daß der erste invertierte Carryeingang (C̅0̅₁̅ₑ̅) mit je einem Gateanschluß des ersten n-Kanal-Feldeffekttransistors (N1) und des dritten p-Kanal-Feldeffekttransistors (P2) und mit einem NAND-Eingang des ORNAND-Gatters (ORNAND1) verbunden ist, daß der zweite invertierte Carryeingang (C̅1̅₁̅ₑ̅) mit je einem Gateanschluß des zweiten n-Kanal-Feldeffekttransistors (N3) und mit dem vierten p-Kanal-Feldeffekttransistor (P4) sowie mit einem ersten ODER-Eingang des ORNAND-Gatters (ORNAND1) verschaltet ist, daß der erste nicht invertierte Carryausgang (C0₁ₐ) mit einem zweiten Anschluß des ersten n-Kanal-Feldeffekttransistors (N1), einem zweiten Anschluß des ersten p-Kanal-Feldeffekttransistors (P1), einem zweiten Anschluß des dritten p-Kanal-Feldeffekttransistors (P2) und einem zweiten Anschluß des dritten n-Kanal-Feldeffekttransistors (N2) verschaltet ist, daß der zweite nicht invertierte Carryausgang (C1₁ₐ) mit einem zweiten Anschluß des zweiten n-Kanal-Feldeffekttransistors (N3), einem zweiten Anschluß des zweiten p-Kanal-Feldeffekttransistors (P3), einem zweiten Anschluß des vierten p-KanalFeldeffekttransistors (P4) sowie mit einem zweiten Anschluß des vierten n-Kanal-Feldeffekttransistors (N4) verschaltet ist, daß der Blockcarryeingang (BL₁ₑ) den Blockcarryausgang (BL₁ₐ) bildet und über einen dritten Inverter (I7) mit einem zweiten ODER-Eingang des ORNAND-Gatters (ORNAND1) verschaltet ist, daß der Ausgang des ORNAND-Gatters (ORNAND1) mit je einem Gateanschluß eines fünften p-Kanal-Feldeffekttransistors (P6) und eines fünften n-Kanal-Feldeffekttransistors (N6) sowie mit einem ersten Anschluß eines sechsten p-Kanal-Feldeffekttransistors (P5) und mit einem ersten Anschluß eines sechsten n-Kanal-Feldeffekttransistors (N5) verbunden ist, daß der Ausgang des zweiten NAND-Gatters (NAND2) mit einem ersten Anschluß des fünften p-Kanal-Feldeffekttransistors (P6) und mit dem Gateanschluß des sechsten p-Kanal-Feldeffekttransistors (P5) und über einen vierten Inverter (I3) mit einem ersten Anschluß des fünften n-Kanal-Feldeffekttransistors (N6) und mit dem Gateanschluß des sechsten n-Kanal-Feldeffekttransistors (N5) verbunden ist, und daß der Summenausgang (S₁) über einen fünften Inverter (I4) jeweils mit einem zweiten Anschluß des fünften und sechsten p-Kanal-Feldeffekttransistors (P6, P5) und jeweils mit einem zweiten Anschluß des fünften und sechsten n-Kanal-Feldeffekttransistors (N6, N5) verbunden ist.

5. "Carry-Select"-Addierer nach Anspruch 1 oder 2, **dadurch gekennzeichnet**, daß die Addiererzelle des zweiten Typs zwei NAND-Gatter (NAND1, NAND2), ein NOR-Gatter (NOR1), ein ANDNOR-Gatter (ANDNOR1), vier Inverter (I1, I2, I3, I4), sechs n-Kanal-Feldeffekttransistoren (N1, N2, N3, N4, N5, N6), sechs p-Kanal-Feldeffekttransistoren (P1, P2, P3, P4, P5, P6), enthält, daß der erste Variableneingang (a₂) mit dem ersten Eingang eines ersten NAND-Gatters (NAND1) und dem ersten Eingang des NOR-Gatters (NOR1) verbunden ist, daß der zweite Variableneingang (b₂) mit dem zweiten Eingang des ersten NAND-Gatters (NAND1) und dem zweiten Eingang des NOR-Gatters (NOR1) verschaltet ist, daß der Ausgang des ersten NAND-Gatters (NAND1) über einen ersten Inverter (I2) mit je einem Gateanschluß eines ersten und zweiten n-Kanal-Feldeffekttransistors (N2, N4) verschaltet ist, daß der Ausgang des ersten NAND-Gatters (NAND1) sowohl mit einem ersten Anschluß eines ersten p-Kanal-Feldeffekttransistors (P2) und einem ersten Anschluß eines zweiten p-Kanal-Feldeffekttransistors (P4) als auch mit einem ersten Anschluß des zweiten NAND-Gatters (NAND2) verbunden ist, daß ein erster Anschluß des ersten und zweiten n-Kanal-Feldeffekttransistors (N2, N4) jeweils mit der Masse (GND) verbunden ist, daß der Ausgang des NOR-Gatters (NOR1) über einen zweiten lnverter (I1) mit jeweils einem Gateanschluß des dritten und vierten p-Kanal-Feldeffekttransistors (P1, P3) und mit einem zweiten Eingang des NAND-Gatters (NAND2) verbunden ist, daß der Ausgang des NOR-Gatters (NOR1) mit jeweils einem ersten Anschluß eines dritten und vierten n-Kanal-Feldeffekttransistors (N1, N3) angeschlossen ist, daß jeweils ein erster Anschluß des dritten und vierten p-Kanal-Feldeffekttransistors (P1, P3) mit der Versorgungsspannung ( V_{DD}) verschaltet ist, daß der erste nicht invertierte Carryeingang (C0₂ₑ) mit jeweils dem Gateanschluß des ersten p-Kanal-Feldeffekttransistors (P2) und des dritten n-Kanal-Feldeffekttransistors (N1) sowie mit einem ersten NOR-Eingang des ANDNOR-Gatters (ANDNOR1) und der zweite nicht invertierte Carryeingang (C1₂ₑ) mit jeweils dem Gateanschluß des zweiten p-Kanal-Feldeffekttransistors (P4) und des vierten n-Kanal-Feldeffekttransistors (N3) sowie mit einem ersten UND-Eingang des ANDNOR-Gatters (ANDNOR1) verschaltet ist, daß der Blockcarryeingang (BL₂ₑ) an einen zweiten UND-Eingang des ANDNOR-Gatters (ANDNOR1) angeschlossen ist und den Blockcarry-ausgang (BL₂ₐ) bildet, daß der erste invertierte Carryausgang (C̅0̅₂̅ₐ̅) jeweils mit einem zweiten Anschluß des ersten p-Kanal-Feldeffekttransistors (P2), des ersten n-Kanal-Feldeffekttransistors (N2), des dritten n-Kanal-Feldeffekttransistors (N1) und des dritten p-Kanal-Feldeffekttransistors (P1) angeschlossen ist, daß der zweite invertierte Carryausgang (C̅1̅₁̅ₐ̅) jeweils mit dem zweiten Anschluß des zweiten p-Kanal-Feldeffekttransistors (P4), des zweiten n-Kanal-Feldeffekttransistors (N4), des vierten n-Kanal-Feldeffekttransistors (N3) und des vierten p-Kanal-Feldeffekttransistors (P3) verschaltet ist, daß der Ausgang des ANDNOR-Gatters (ANDNOR1) mit dem Gateanschluß eines fünften n-Kanal-Feldeffekttransistors (N6), mit dem Gateanschluß eines fünften p-Kanal-Feldeffekttransistors (P6) sowie jeweils mit einem ersten Anschluß eines sechsten n-Kanal-Feldeffekttransistors (N5) und eines sechsten p-Kanal-Feldeffekttransistors (P5) verschaltet ist, daß der Ausgang des zweiten NAND-Gatters (NAND2) mit einem ersten Anschluß des fünften n-Kanal-Feldeffekttransistors (N6) und mit dem Gateanschluß des sechsten n-Kanal-Feldeffekttransistors (N5) sowie über einen dritten Inverter (I3) mit dem Gateanschluß des sechsten p-Kanal-Feldeffekttransistors (P5) und mit einem ersten Anschluß des fünften p-Kanal-Feldeffekttransistors (P6) verbunden ist, und daß der Summenausgang (S2) über einen vierten Inverter (I4) jeweils mit einem zweiten Anschluß des fünften und sechsten n-Kanal-Feldeffekttransistors (N6, N5) und mit einem zweiten Anschluß des fünften und sechsten p-Kanal-Feldeffekttransistors (P6, P5) verschaltet ist.

## Claims

1. Carry-select adder having blockwise divided adder cells, each adder cell including two variable inputs (a₀, b₀, a₁, b₁, a₂, b₂, ...aₙ, bₙ), a block-carry input (BL₀ₑ; BL₁ₑ, BL₂ₑ...BLₙₑ), a block-carry output (BL₀ₐ, BL₁ₐ, BL₂ₐ, ...BLₙₐ), a sum output (S₀, S₁, S₂, ...Sₙ), a first and second carry input (C0_{Oe}, C̅1̅₀̅ₑ̅, C̅0̅₁̅ₑ̅, C1₁ₑ, C0₂ₑ, C1₂ₑ, ...C̅0̅₀̅ₙ̅, C̅1̅ₑ̅ₙ̅) and a first and second carry output (C̅0̅₀̅ₐ̅, C̅1̅₀̅ₐ̅, C0₁ₐ, C1₁ₐ, C̅0̅₂̅ₐ̅, C̅1̅₂̅ₐ̅, ..., C0ₙₐ, C1ₙₐ) and each block including an input adder cell and a specific number of adder cells of a first and second type, the first and second carry inputs (C0₀ₑ; C1₀ₑ) and the block-carry input (BL₀ₑ) of the input adder cell of the first block representing further variable inputs, characterized in that in each case the first and second inverted carry outputs (C̅0̅₀̅ₐ̅, C̅1̅₀̅ₐ̅) of an input adder cell are respectively connected to the first and second inverted carry inputs (C̅0̅₁̅ₑ̅, C̅1̅₁̅ₑ̅) of an adder cell of the first type and in each case the first and second non-inverted carry outputs (C0₁ₐ, C1₁ₐ) of the adder cell of the first type are respectively connected to the first and second non-inverted carry inputs (C0₂ₑ, C1₂ₑ) of an address cell of the second type, in that the block carry output (BL₀ₐ) of the input adder cell is connected to the block carry input (BL₁ₑ) of the adder cell of the first type and the block carry output (BL₁ₐ) of the adder cell of the first type is connected to the block carry input (BL₂ₑ) of the adder cell of the second type and the further adder cells in a block alternately of the first type and second type are likewise interconnected via the carry input and carry outputs and via the block carry inputs and block carry outputs, the input adder cell and the adder cells of the first and second types having a gate arrangement for two variables for evaluating a first and second carry input signal, for forming sums and for forming carries, and one variable input being provided in each case for one of the two variables, in that the gate arrangement of the adder cell of the first type is formed in such a way that the charging of the capacitor of the first and second non-inverted carry outputs (C0₁ₐ, C1₁ₐ) is performed either respectively via two field effect transistors (P1, P3; N2, N4) acting as pull up or pull down transistors or respectively via two series circuits for the first and second non-inverted carry outputs (C0₁ₐ, C1₁ₐ), the series circuits respectively including one inverter gate (I1, I2) and respectively one field effect transistor (N1, P2; N3, P4) acting as transfer transistor, and in that the gate arrangement of the adder cell of the second type is formed in such a way that the charge of the capacitor of the first and second inverted carry outputs (C̅0̅₂̅ₐ̅, C̅1̅₂̅ₐ̅) is formed either respectively via two field effect transistors (P1, P3; N2, N4) acting as pull up or pull down transistors or respectively via two field effect transistors (N1, P2; N3, P4), acting as transfer transistors, for the first and second inverted carry outputs (C̅0̅₂̅ₐ̅, C̅1̅₂̅ₐ̅) and that the field affect transistors (N1, N2, N3, N4, P1, P2, P3, P4) acting as pull up or pull down transistors and as transfer transistors are not a component of a combination gate inside the gate arrangement.

2. Carry-select adder according to Claim 1, characterized in that in the case of an addition of input signals which are present at the variable inputs (a₀, b₀; a₁, b₁; a₂, b₂; ...aₙ, bₙ) of each adder cell the further variable inputs are connected to a fixed low level.

3. Carry-select adder according to Claim 1 or 2, characterized in that the input adder cell includes two NAND gates (NAND1, NAND2), five inverters (I1, I3, I4, I5, I6), one NOR gate (NOR1), one ANDNOR gate (ANDNOR1), two p-channel field effect transistors (P5, P6) and two n-channel field effect transistors (N5, N6), in that the first variable input (a₀) is connected to a first input of a first NAND gate (NAND1) and to a first input of a NOR gate (NOR1), in that the second variable input (b₀) is connected to the second input of the first NAND gate (NAND1) and to the second input of the NOR gate (NOR1), in that the output of the first NAND gate (NAND1) forms the first inverted carry output (C̅0̅₀̅ₐ̅) and is simultaneously connected to the first input of the second NAND gate (NAND2), in that the output of the NOR gate (NOR1) forms the second inverted carry output (C̅1̅₁̅ₐ̅) and is connected via a first inverter (I1) to the second terminal of the second NAND gate (NAND2), in that the first carry input (CO₀ₑ) is connected to the NOR input of the ANDNOR gate (ANDNOR1) and the second carry input (C1₀ₑ) and the block carry input (BL₀ₑ) are respectively connected to an AND input of the ANDNOR gate (ANDNOR1), in that the output of the ANDNOR gate (ANDNOR1) forms the block carry output (BL₀ₐ) of the input adder cell via a second inverter (I6) and the output of the ANDNOR gate (ANDNOR1) is connected via a third inverter (I5) to the gate of a first p-channel field effect transistor (P6) and to the gate of a first n-channel field effect transistor (N6) as well as to a first terminal of a second p-channel field effect transistor (P5) and to a first terminal of a second n-channel field effect transistor (N5), in that the output of the second NAND gate (NAND2) is connected, on the one hand, to the gate of the second p-channel field effect transistor (P5) and, on the other hand, to a first terminal of the first p-channel field effect transistor (P6) and via a fourth inverter (I3) to the gate of the second n-channel field effect transistor (N5) and to the first terminal of the first n-channel field effect transistor (N6), in that the second terminal of the first and second n-channel field effect transistors (N6, N5) and the second terminal of the first and second p-channel field effect transistors (P6, P5) are connected to the input of the fifth inverter (I4), and in that the output of the fifth inverter (I4) forms the sum output (S₀) of the input adder cell.

4. Carry-select adder according to Claim 1 or 2, characterized in that the adder cell of the first type includes two NAND gates (NAND1, NAND2), five inverters (I1, I2, I4, I7), one NOR gate (NOR1), one ORNAND gate (ORNAND1), six n-channel field effect transistors (N1, N2, N3, N4, N5, N6) and six p-channel field effect transistors (P1, P2, P3, P4, P5, P6), in that the first variable input (a₁) of the adder cell of the first type is connected to the first input of the first NAND gate (NAND1) and to the first input of the NOR gate (NOR1), in that the second variable input (b₁) is connected to the second input of the first NAND gate (NAND1) and to the second input of the NOR gate (NOR1), in that the output of the first NAND gate (NAND1) is connected via a first inverter (I2) to the first terminal of a first n-channel field effect transistor (N1) and to the first terminal of a second n-channel field effect transistor (N3), the first inverter (I2) and the first n-channel field effect transistor (N1) as well as the second n-channel field effect transistor (N3) and the first inverter (I2) respectively forming a series circuit, in that the output of the first NAND gate (NAND1) is connected to a first input of a second NAND gate (NAND2) and to respectively one gate terminal of a first and second p-channel field effect transistor (P1, P3), in that in each case a first terminal of the first and second p-channel field effect transistor (P1, P3) is connected to the supply voltage (V_{DD}), in that the output of the NOR gate (NOR1) is connected via a second inverter (I1) to the first terminal of a third and of a fourth p-channel field effect transistor (P2, P4), in that the output of the second inverter (I1) is connected to the second input of the second NAND gate (NAND2), in that the output of the NOR gate (NOR1) is connected in each case to a gate terminal of a third and fourth n-channel field effect transistor (N2, N4), in that a first terminal of the third and fourth n-channel field effect transistors (N2, N4) is connected to frame (GND), in that the first inverted carry input (C̅0̅₁̅ₑ̅) is connected in each case to a gate terminal of the first n-channel field effect transistor (N1) and of the third p-channel field effect transistor (P2) and to a NAND input of the ORNAND gate (ORNAND1), in that the second inverted carry input (C1₁ₑ) is connected in each case to a gate terminal of the second n-channel field effect transistor (N3) and of the fourth p-channel field effect transistor (P4) as well as to a first OR input of the ORNAND gate (ORNAND1), in that the first non-inverted carry output (C0₁ₑ) is connected to a second terminal of the first n-channel field effect transistor (N1), a second terminal of the first p-channel field effect transistor (P1), a second terminal of the third p-channel field effect transistor (P2) and a second terminal of the third n-channel field effect transistor (N2), in that the second non-inverted carry output (C1₁ₐ) is connected to a second terminal of the second n-channel field effect transistor (N3), a second terminal of the second p-channel field effect transistor (P3), a second terminal of the fourth p-channel field effect transistor (P4) and to a second terminal of the fourth n-channel field effect transistor (N4), in that the block carry input (BL₁ₑ) forms the block carry output (BL₁ₐ) and is connected via a third inverter (I7) to a second OR input of the ORNAND gate (ORNAND1), in that the output of the ORNAND gate (ORNAND1) is connected in each case to a gate terminal of a fifth p-channel field effect transistor (P6) and of a fifth n-channel field effect transistor (N6) as well as to a first terminal of a sixth p-channel field effect transistor (P5) and to a first terminal of a sixth n-channel field effect transistor (N5), in that the output of the second NAND gate (NAND2) is connected to a first terminal of the fifth p-channel field effect transistor (P6) and to the gate terminal of the sixth p-channel field effect transistor (P5) and via a fourth inverter (I3) to a first terminal of the fifth n-channel field effect transistor (N6) and to the gate terminal of the sixth n-channel field effect transistor (N5), and in that the sum output (S1) is connected via a fifth inverter (I4) respectively to a second terminal of the fifth and sixth p-channel field effect transistors (P6, P5) and respectively to a second terminal of the fifth and sixth n-channel field effect transistors (N6, N5).

5. Carry-select adder according to Claim 1 or 2, characterized in that the adder cell of the second type includes two NAND gates (NAND1, NAND2), one NOR gate (NOR1), one ANDNOR gate (ANDNOR1), four inverters (I1, I2, I3, I4), six n-channel field effect transistors (N1, N2, N3, N4, N5, N6), six p-channel field effect transistors (P1, P2, P3, P4, P5, P6), in that the first variable input (a₂) is connected to the first input of a first NAND gate (NAND1) and to the first input of the NOR gate (NOR1), in that the second variable input (b₂) is connected to the second input of the first NAND gate (NAND1) and to the second input of the NOR gate (NOR1), in that the output of the first NAND gate (NAND1) is connected via a first inverter (I2) to in each case one gate terminal of a first and second n-channel field effect transistor (N2, N4), in that the output of the first NAND gate (NAND1) is connected both to a first terminal of a first p-channel field effect transistor (P2) and to a first terminal of a second p-channel field effect transistor (P4) and to a first terminal of the second NAND gate (NAND2), in that a first terminal of the first and second n-channel field effect transistors (N2, N4) is respectively connected to frame (GND), in that the output of the NOR gate (NOR1) is connected via a second inverter (I1) to in each case one gate terminal of the third and fourth p-channel field effect transistors (P1, P3) and to a second input of the NAND gate (NAND2), in that the output of the NOR gate (NOR1) is connected in each case to a first terminal of a third and fourth n-channel field effect transistor (N1, N3), in that in each case a first terminal of the third and fourth p-channel field effect transistors (P1, P3) is connected to the supply voltage (V_{DD}), in that the first non-inverted carry input (C0₂ₑ) is connected to in each case the gate terminal of the first p-channel field effect transistor (P2) and of the third n-channel field effect transistor (N1) as well as to a first NOR input of the ANDNOR gate (ANDNOR1) and the second non-inverted carry input (C1₂ₑ) is connected to in each case the gate terminal of the second p-channel field effect transistor (P4) and of the fourth n-channel field effect transistor (N3) as well as to a first AND input of the ANDNOR gate (ANDNOR1), in that the block carry input (BL₂ₑ) is connected to a second AND input of the ANDNOR gate (ANDNOR1) and forms the block carry output (BL₂ₐ), in that the first inverted carry output (C̅0̅₂̅ₐ̅) is connected in each case to a second terminal of the first p-channel field effect transistor (P2), of the first n-channel field effect transistor (N2), of the third n-channel field effect transistor (N1) and of the third p-channel field effect transistor (P1), in that the second inverted carry output (C̅1̅₁̅ₐ̅) is connected in each case to the second terminal of the second p-channel field effect transistor (P4), of the second n-channel field effect transistor (N4), of the fourth n-channel field effect transistor (N3) and of the fourth p-channel field effect transistor (P3), in that the output of the ANDNOR gate (ANDNOR1) is connected to the gate terminal of a fifth n-channel field effect transistor (N6), to the gate terminal of a fifth p-channel field effect transistor (P6) and in each case to a first terminal of a sixth n-channel field effect transistor (N5) and of a sixth p-channel field effect transistor (P5), in that the output of the second NAND gate (NAND2) is connected to a first terminal of the fifth n-channel field effect transistor (N6) and to the gate terminal of the sixth n-channel field effect transistor (N5) as well as via a third inverter (I3) to the gate terminal of the sixth p-channel field effect transistor (P5) and to a first terminal of the fifth p-channel field effect transistor (P6), and in that the sum output (S2) is connected via a fourth inverter (I4) in each case to a second terminal of the fifth and sixth n-channel field effect transistors (N6, N5) and to a second terminal of the fifth and sixth p-channel field effect transistors (P6, P5).

## Revendications

1. Additionneur à sélection de retenues comportant des cellules d'additionneur subdivisées en blocs, chaque cellule d'additionneur comprenant deux entrées (a₀,b₀; a₁,b₁; a₂,b₂, ... aₙ, bₙ) de variables, une entrée de retenue de bloc (BL_{Oe}; BL₁ₑ; BL₂ₑ...BLₙₑ), une sortie de retenue de bloc (BL_{Oa}; BL₁ₐ; BL₂ₐ...BLₙₐ), une sortie de somme (S₀; S₁, S₂ ...Sₙ), des première et deuxième entrées de retenue (C0₀ₑ; C1₀ₑ; C̅0̅₁̅ₑ̅; C̅1̅₁̅ₑ̅; C0₂ₑ; C1₂ₑ; ... C̅0̅₀̅ₙ̅; C̅1̅ₑ̅ₙ̅) et des première et deuxième sorties de retenue (C̅0̅₀̅ₐ̅; C̅1̅₀̅ₐ̅; C0₁ₐ; C1₁ₐ; C̅0̅₂̅ₐ̅; C̅1̅₂̅ₐ̅,...C0ₙₐ, C1ₙₐ) et chaque bloc comprenant une cellule d'additionneur d'entrée et un nombre déterminé de cellules d'additionneur d'un premier et d'un second type, la première et la deuxième entrée (C0₀ₑ; C1₀ₑ) de retenue et l'entrée (BL₀ₑ) de retenue de bloc de la cellule d'additionneur d'entrée du premier bloc représentant d'autres entrées de variables, caractérisé en ce que la première et la deuxième sorties inverseuses de retenue (C̅0̅₀̅ₐ̅, C̅1̅₀̅ₐ̅) d'une cellule d'additionneur d'entrée sont connectées respectivement à la première et à la deuxième entrée inverseuse de retenue (C̅0̅₁̅ₑ̅, C̅1̅₁̅ₑ̅) d'une cellule d'additionneur du premier type, et la première et la deuxième sortie non inverseuse de retenue (C0₁ₐ, C1₁ₐ) de la cellule d'additionneur du premier type sont connectées respectivement à la première et à la deuxième entrée non inverseuse de retenue (C0₂ₑ, C1₂ₑ) d'une cellule d'additionneur du deuxième type, la sortie (BL₀ₐ) de retenue de bloc de la cellule d'additionneur d'entrée est reliée à l'entrée (BL₁ₑ) de retenue de bloc de la cellule d'additionneur du premier type et la sortie (BL₁ₐ) de retenue de bloc de la cellule d'additionneur du premier type est reliée à l'entrée de retenue de bloc (BL₂ₑ) de la cellule d'additionneur du deuxième type, et les autres cellules d'additionneur dans un bloc en alternance du premier type et du deuxième types sont reliées également les unes aux autres par l'intermédiaire des entrées et sorties de retenue et des entrées et sorties de retenue de bloc, la cellule d'additionneur d'entrée et les cellules d'additionneur du premier et du deuxième types comportant un dispositif de portes pour deux variables destinées à l'exploitation d'un premier et d'un second signal d'entrée de retenue, à la formation d'une somme et à la formation d'une retenue et une entrée de variables étant prévue pour une des deux variables, le dispositif de portes de la cellule d'additionneur du premier type est formé de telle sorte que la charge de la capacité des première et deuxième sorties non inverseuses de retenue (C0₁ₐ, C1₁ₐ) s'effectue soit par l'intermédiaire de deux transistors (P1, P3; N2, N4) à effet de champ agissant comme transistors reliant aux tensions hautes ou reliant aux tensions basses, soit par l'intermédiaire de deux circuits séries pour les première et deuxième sorties non inverseuses de retenue (C0₁ₐ, C1₁ₐ), les circuits séries comprenant chacun une porte inverseuse (I1, I2) et un transistor (N1, P2; N3, P4) à effet de champ agissant en tant que transistor de transfert, le dispositif de porte de la cellule d'additionneur du deuxième type est formé de telle sorte que la charge de la capacité des première et deuxième sorties inverseuses de retenue (C̅0̅₂̅ₐ̅, C̅1̅₂̅ₐ̅) est formée soit par l'intermédiaire de deux transistors (P1, P3; N2, N4) à effet de champ agissant en tant que transistors reliant aux tensions hautes ou aux tensions basses, soit par l'intermédiaire de deux transistors (N1, P2; N3, P4) à effet de champ agissant en tant que transistors de transfert pour les première et deuxième sorties (C̅0̅₂̅ₐ̅, C̅1̅₂̅ₐ̅) inverseuses de retenue et les transistors à effet de champ (N1, N2, N3, N4, P1, P2, P3, P4) agissant en tant que transistors reliant aux hautes tensions ou aux basses tensions et en tant que transistors de transfert ne font pas partie d'une porte combinatoire à l'intérieur du dispositif de portes.

2. Additionneur à sélection de retenues suivant la revendication 1, caractérisé en ce que lors d'une addition de signaux d'entrée, qui sont appliqués aux entrées (a₀, b₀; a₁, b₁; a₂, b₂; ...aₙ, bₙ) de variables de chaque cellule d'additionneur, les autres entrées de variables sont connectées à un niveau fixe bas.

3. Additionneur à sélection de retenue suivant la revendication 1 ou 2, caractérisé en ce que la cellule d'additionneur d'entrées comprend deux portes NON-ET (NAND1, NAND2), cinq inverseurs (I1, I3, I5, I6), une porte NON-OU (NOR1), une porte ANDNOR (ANDNOR1), deux transistors (N5, N6) à effet de champ à canal n, deux transistros (P5,P6) à effet de champ à canal p, la première entrée (a₀) de variables est reliée à une première entrée d'une première porte NON-ET (NAND1) et à la première entrée d'une porte NON-OU (NOR1), la deuxième entrée (b₀) de variables est reliée à la deuxième entrée de la première porte NON-ET (NAND1) et à la deuxième entrée de la porte NON-OU (NOR1), la sortie de retenue de la première porte NON-ET (NAND1) forme la première sortie inverseuse de retenue (C̅0̅₀̅ₐ̅) et est connectée en même temps à la première entrée de la deuxième porte NON-ET (NAND2), la sortie de retenue de la porte NON-OU (NOR1) forme la deuxième sortie (C̅1̅₁̅ₐ̅) inverseuse de retenue et est connectée par l'intermédiaire d'un premier inverseur (I1) à la deuxième borne de la deuxième porte NON-ET (NAND2), la première entrée (C0₀ₑ) de retenue est connectée à l'entrée NOR de la porte ANDNOR (ANDNOR1) et la deuxième entrée de retenue (C1₀ₑ) et l'entrée (BL₀ₑ) de retenue de bloc est connectée à une entrée AND de la porte ANDNOR (ANDNOR1), la sortie de la porte ANDNOR (ANDNOR1) forme, par l'intermédiaire d'un deuxième inverseur (I6) la sortie (BL₀ₐ) de retenue de bloc de la cellule d'additionneur d'entrée et la sortie de la porte ANDNOR (ANDNOR1) est connectée par l'intermédiaire d'un troisième inverseur (I5) à la grille d'un premier transistor (P6) à effet de champ à canal p et à la grille d'un premier transistor (N6) à effet de champ à canal n, ainsi qu'à une première borne d'un deuxième transistor (P5) à effet de champ à canal p et à une première borne d'un deuxième transistor (N5) à effet de champ à canal n, la sortie de la deuxième porte NON-ET (NAND2) est connectée d'une part à la grille du deuxième transistor (P5) à effet de champ à canal p et d'autre part à une première borne du premier transistor (P6) à effet de champ à canal p et est connectée par l'intermédiaire d'un quatrième inverseur (I3) à la grille du deuxième transistor (N5) à effet de champ à canal n et à la première borne du premier transistor (N6) à effet de champ à canal n, la deuxième borne des premier et deuxième transistors (N6,N5) à effet de champ à canal n et la deuxième borne des premier et deuxième transistors (P6, P5) à effet de champ à canal p sont connectées à l'entrée d'un cinquième inverseur (I4) et la sortie du cinquième inverseur (I4) forme la sortie (S₀) de somme de la cellule d'additionneur d'entrée.

4. Additionneur à sélection de retenues selon la revendication 1 ou 2, caractérisé en ce que la cellule d'additionneur du premier type comprend deux portes NON-ET (NAND1, NAND2), cinq inverseurs (I1, I2, I4, I7), une porte NON-OU (NOR1), une porte ORNAND (ORNAND1), six transistors à effet de champ à canal n (N1, N2, N3, N4, N5, N6) et six transistors à effet de champ à canal p (P1, P2, P3, P4, P5, P6), la première entrée (a₁) de variables de la cellule d'additionneur du premier type est reliée à la première entrée de la première porte NON-ET (NAND1) et à la première entrée de la porte NON-OU (NOR1), la deuxième entrée (b₁) de variables est connectée à la deuxième entrée de la première porte NON-ET (NAND1) et à la deuxième entrée de la porte NON-OU (NOR1), la sortie de la première porte NON-ET (NAND1) est reliée par l'intermédiaire d'un premier inverseur (I2) à la première borne d'un premier transistor (N1) à effet de champ à canal n et à la première borne d'un deuxième transistor (N3) à effet de champ à canal n, le premier inverseur (I2) et le premier transistor (N1) à effet de champ à canal n ainsi que le deuxième transistor (N3) à effet de champ à canal n et le premier inverseur (I2) formant un circuit série, la sortie de la première porte NON-ET (NAND1) est reliée à une première entrée d'une deuxième porte NON-ET (NAND2) et à chacune des bornes de grille d'un premier et d'un deuxième transistors (P1, P3) à effet de champ à canal p, chacune des premières bornes des premier et deuxième transistors (P1, P3) à effet de champ à canal p est connectée à la tension (V_{DD}) d'alimentation, la sortie de la porte NON-OU (NOR1) est connectée par l'intermédiaire d'un deuxième inverseur (I1) à la première borne d'un troisième et d'un quatrième transistors (P2, P4) à effet de champ à canal p, la sortie du deuxième inverseur (I1) est reliée à la deuxième entrée de la deuxième porte NON-ET (NAND2), la sortie de la porte NON-OU (NOR1) est connectée à chacune des bornes de grille d'un troisième et d'un quatrième transistors (N2, N4) à effet de champ à canal n, une première borne des troisième et quatrième transistors (N2, N4) à effet de champ à canal n est reliée à la masse (GND), la première entrée (C̅0̅₁̅ₑ̅) inverseuse de retenue est reliée à chacune des bornes de grille du premier transistor (N1) à effet de champ à canal n et du troisième transistor (P2) à effet de champ à canal p et à une entrée NAND de la porte ORNAND (ORNAND1), la deuxième entrée (C̅1̅₁̅ₑ̅) inverseuse de retenue est connectée à chacune des bornes de grille du deuxième transistor (N3) à effet de champ à canal n et du quatrième transistor (P4) à effet de champ à canal p ainsi qu'à une première entrée OR de la porte ORNAND (ORNAND1), la première sortie (C0₁ₐ) non inverseuse de retenue est connectée à une deuxième borne du premier transistor (N1) à effet de champ à canal n, à une deuxième borne du premier transistor (P1) à effet de champ à canal p, à une deuxième borne du troisième transistor (P2) à effet de champ à canal p, et à une deuxième borne du troisième transistor (N2) à effet de champ à canal n, la deuxième sortie (C1₁ₐ) non inverseuse de retenue est connectée à une deuxième borne du deuxième transistor (N3) à effet de champ à canal n, à une deuxième borne du deuxième transistor (P3) à effet de champ à canal p, à une deuxième borne du quatrième transistor (P4) à effet de champ à canal p, ainsi qu'à une deuxième borne du quatrième transistor (N4) à effet de champ à canal n, l'entrée (BL₁ₑ) de retenue de bloc forme la sortie (BL₁ₐ) de retenue de bloc et est connectée par l'intermédiaire d'un troisième inverseur (I7) à une deuxième entrée OR de la porte ORNAND (ORNAND1), la sortie de la porte ORNAND (ORNAND1) est reliée à chacune des bornes de grille d'un cinquième transistor (P6) à effet de champ à canal p et d'un cinquième transistor (N6) à effet de champ à canal n ainsi qu'à une première borne d'un sixième transistor (P5) à effet de champ à canal p et à une première borne d'un sixième transistor (N5) à effet de champ à canal n, la sortie de la deuxième porte NON-ET (NAND2) est reliée à une première borne du cinquième transistor (P6) à effet de champ à canal p et à la borne de grille du sixième transistor (P5) à effet de champ à canal p et par l'intermédiaire d'un quatrième inverseur (I3) à une première borne du cinquième transistor (N6) à effet de champ à canal n et à la borne de grille du sixième transistor (N5) à effet de champ à canal n, la sortie (S₁) de somme est reliée par l'intermédiaire d'un cinquième inverseur (I4) à chacune des deuxièmes bornes des cinquième et sixième transistors (P6, P5) à effet de champ à canal p et à chacune des deuxièmes bornes des cinquième et sixième transistors (N6, N5) à effet de champ à canal n.

5. Additionneur à sélection de retenues suivant la revendication 1 ou 2, caractérisé en ce que la cellule d'additionneur du deuxième type comprend deux portes NON-ET (NAND1, NAND2), une porte NON-OU (NOR1, NOR2), une porte ANDNOR (ANDNOR1), quatre inverseurs (I1,I2,I3,I4), six transistors (N1,N2,N3,N4,N5,N6) à effet de champ à canal n, six transistors (P1,P2,P3,P4,P5,P6) à effet de champ à canal p, la première entrée (a₂) de variables est reliée à la première entrée d'une première porte NON-ET (NAND1) et à la première entrée de la porte NON-OU (NOR1), la deuxième entrée (b₂) de variables est connectée à la deuxième entrée de la première porte NON-ET (NAND1) et la deuxième entrée de la porte NON-OU (NOR1), la sortie de la première porte NON-ET (NAND1) est connectée par l'intermédiaire d'un premier inverseur (I2) à chacune des bornes de grille d'un premier et d'un deuxième transistor (N2,N4) à effet de champ à canal n, la sortie de la première porte NON-ET (NAND1) est reliée à la fois à une première borne d'un premier transistor (P2) à effet de champ à canal p, à une première borne d'un deuxième transistor (P4) à effet de champ à canal p et aussi à une première borne de la deuxième porte NON-ET (NAND2), une première borne des premier et deuxième transistors (N2, N4) à effet de champ à canal n est reliée à la masse (GND), la sortie de la porte NON-OU (NOR1) est reliée par l'intermédiaire d'un deuxième inverseur (I1) à chacune des bornes de grille des troisième et quatrième transistors (P1, P3) à effet de champ à canal p et à une deuxième entrée de la porte NON-ET (NAND2), la sortie de la porte NON-OU (NOR1) est connectée à chacune des premières bornes de troisième et quatrième transistors (N1, N3) à effet de champ à canal n, chaque première borne des troisième et quatrième transistors (P1, P3) à effet de champ à canal p est reliée à la tension (V_{DD}) d'alimentation, la première entrée (C0₂ₑ) non inverseuse de retenue est connectée à chacune des bornes de grille du premier transistor (P2) à effet de champ à canal p et du troisième transistor (N1) à effet de champ à canal n ainsi qu'à une première entrée NOR de la porte ANDNOR (ANDNOR1) et la deuxième entrée non inverseuse (C1₂ₐ) de retenue est connectée à chacune des bornes de grille du deuxième transistor (P4) à effet de champ à canal p et du quatrième transistor (N3) à effet de champ à canal n ainsi qu'à une première entrée AND de la porte ANDNOR (ANDNOR1), l'entrée (BL₂ₑ) de retenue de bloc est connectée à une deuxième entrée AND de la porte ANDNOR (ANDNOR1) et forme la sortie (BL₂ₐ) de retenue de bloc, la première sortie (C̅0̅₂̅ₐ̅) inverseuse de retenue est reliée à chacune des deuxièmes bornes du premier transistor (P2) à effet de champ à canal p, du premier transistor (N2) à effet de champ à canal n, du troisième transistor (N1) à effet de champ à canal n et du troisième transistor (P1) à effet de champ à canal p, la deuxième sortie inverseuse (C̅1̅₁̅ₐ̅) de retenue est reliée à chacune des deuxièmes bornes du deuxième transistor (P4) à effet de champ à canal p, du deuxième transistor (N4) à effet de champ à canal n, du quatrième transistor (N3) à effet de champ à canal n, et du quatrième transistor (P3) à effet de champ à canal p, la sortie de la porte ANDNOR (ANDNOR1) est connectée à la borne de grille d'un cinquième transistor (N6) à effet de champ à canal n, à la borne de grille d'un cinquième transistor (P6) à effet de champ à canal p ainsi qu'à chacune des premières bornes d'un sixième transistor (N5) à effet de champ à canal n et d'un sixième transistor (P5) à effet de champ à canal p, la sortie de la deuxième porte NON-ET (NAND2) est reliée à une première borne du cinquième transistor (N6) à effet de champ à canal n et à la borne de grille du sixième transistor (N5) à effet de champ à canal n ainsi que par l'intermédiaire d'un troisième inverseur (I3) à la borne de grille du sixième transistor (P5) à effet de champ à canal p et à une première borne du cinquième transistor (P6) à effet de champ à canal p et la sortie (S2) de somme est connectée par l'intermédiaire d'un quatrième inverseur (I4) à chacune des deuxièmes bornes des cinquième et sixième transistors (N6, N5) à effet de champ à canal n et à chacune des deuxièmes bornes des cinquième et sixième transistors (P6, P5) à effet de champ à canal p.
